# FASCICULE DE BREVET EUROPEEN

(11) **EP 1 703 827 B1**
(45) Date de publication et mention de la délivrance du brevet: **07.11.2007**
(21) Numéro de dépôt: 05717356.9
(22) Date de dépôt: 03.01.2005
(51) Int. Cl.: A47J 37/06

(54) **APPAREIL ELECTROMENAGER DU TYPE GAUFRIER**
ELEKTRISCHES HAUSHALTSGERÄT NACH DER ART EINES WAFFELEISENS
HOUSEHOLD ELECTRICAL APPLIANCE OF THE WAFFLE IRON TYPE

(30) Priorité: 06.01.2004 FR 0400064
(43) Date de publication de la demande: 27.09.2006
(73) Titulaire: SEB SA, 69130 Ecully (FR)
(72) Inventeur: BOUVIER, Pierre, F-38300 Bourgoin-Jallieu (FR)
(74) Mandataire: Pichat, Thierry
(86) Numéro de dépôt international: PCT/FR2005/000004
(87) Numéro de publication internationale: WO 2005/074771

(56) Documents cités:
- EP-A- 0 792 608
- CH-A- 680 185
- DE-A- 2 225 926
- DE-U- 8 615 606
- US-A1- 2003 213 374

## Description

La présente invention concerne un appareil électroménager du type gaufrier, c'est à dire un gaufrier, un gril-viande, un appareil à croque-monsieur ou un appareil à madeleines.

On connaît un tel appareil du type comprenant deux sous-ensembles chauffants qui sont articulés l'un à l'autre par une charnière, et qui comprennent, chacun, un corps de cuisson et une résistance électrique de chauffe fixée à un boîtier de connexion électrique séparable du corps de cuisson.

Un tel appareil est décrit dans le document CH 680 185. Dans ce document, les deux corps de cuisson sont articulés l'un à l'autre par la charnière, chaque boîtier pouvant être fixé latéralement au corps de cuisson correspondant par coulissement de l'un dans l'autre selon une direction parallèle à l'axe de a charnière. Cette configuration permet de pouvoir laver l'ensemble de l'appareil à grandes eaux après déconnexion des deux boîtiers. Toutefois, d'une part, l'encombrement de cet appareil quand les deux sous-ensembles chauffants (hors boîtier) sont en position ouverte rend son nettoyage très peu pratique, et, d'autre part, l'alimentation électrique des deux boîtiers nécessite une interconnexion entre ces deux pièces, au moins juste avant la connexion au secteur, ce qui implique une liaison entre les deux boîtiers qui rend leur manipulation relativement dépendante l'un de l'autre.

Le problème posé est de réaliser un appareil électrique pouvant être lavé à grandes eaux, tout en ne nécessitant pas un grand espace pour réaliser ce lavage, et dont les éléments séparables sont facilement manipulables indépendamment les uns des autres.

Selon la présente invention, les boîtiers de connexion électrique sont solidarisés l'un à l'autre par la charnière de l'appareil.

Ainsi, la charnière relie les deux boîtiers de connexion entre eux, mais pas les deux corps de cuisson qui, une fois séparés de leur boîtier respectif, sont totalement indépendants. De ce fait, la manipulation du corps de cuisson est particulièrement aisé, notamment pour le lavage : le corps de cuisson ayant sensiblement la dimension d'un sous-ensemble chauffant, il peut être introduit dans un lave vaisselle, sans présenter un encombrement important (les deux corps de chauffe peuvent par exemple être disposés l'un à côté de l'autre, comme deux assiettes).

D'autres particularités et avantages de la présente invention apparaîtront dans la description du mode de réalisation donné à titre d'exemple non limitatif et illustré par les dessins annexés.
La figure 1 est une vue en perspective d'un gaufrier conforme à la présente invention, les deux sous-ensembles chauffants étant en position ouverte ;
La figure 2 est une vue en perspective de la charnière du gaufrier en position fermée ;

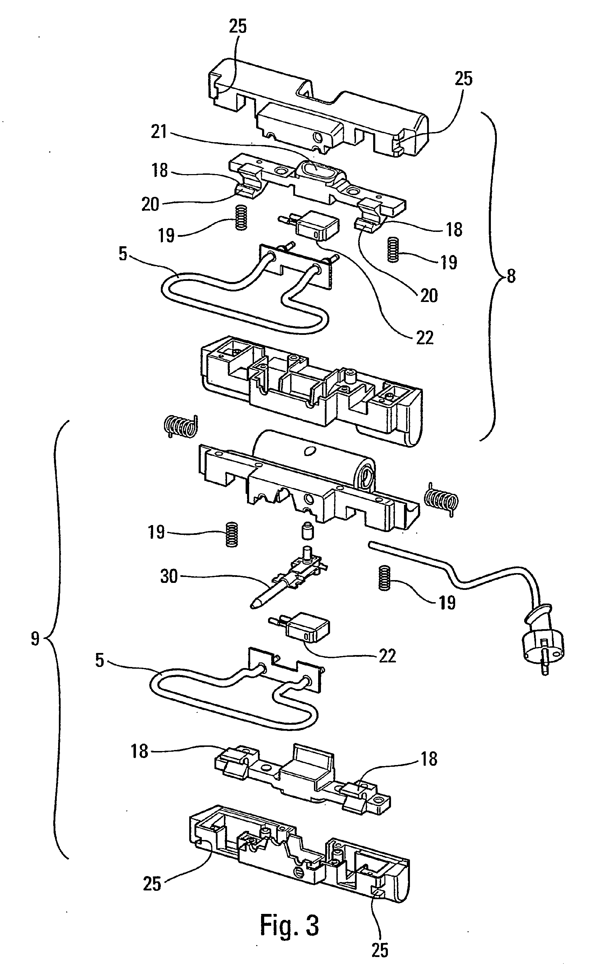

La figure 3 est une vue en perspective éclatée de la charnière ; et
La figure 4 est une vue arrière en perspective des deux corps de cuisson séparés de la charnière.

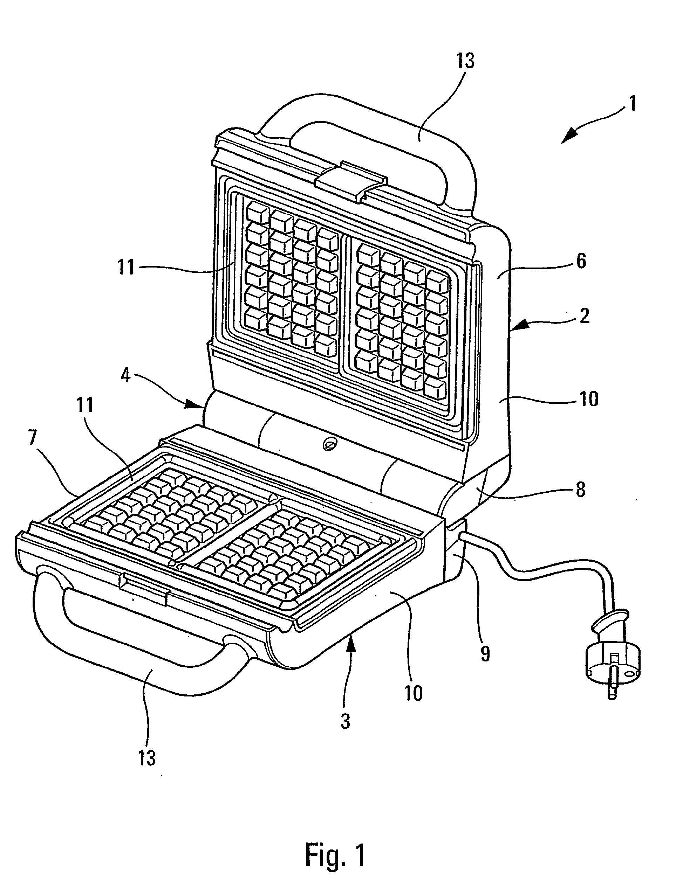

Comme on peut le voir à la figure 1, un gaufrier 1 comprend un sous-ensemble chauffant supérieur 2 et un sous-ensemble chauffant inférieur 3, les deux sous-ensembles chauffants 2,3 étant articulés l'un à l'autre par une charnière 4 et mobiles entre une position ouverte dans laquelle la pâte à gaufre peut être disposée sur le sous-ensemble chauffant inférieur 3, et une position fermée dans laquelle les deux sous-ensembles chauffants 2,3 sont situés l'un au-dessus de l'autre, enveloppant la pâte à cuire.

Chaque sous-ensemble chauffant 2,3 comporte une résistance électrique de chauffe 5 et un corps de cuisson 6,7, la résistance électrique de chauffe 5 étant séparable du corps de cuisson 6,7 correspondant.

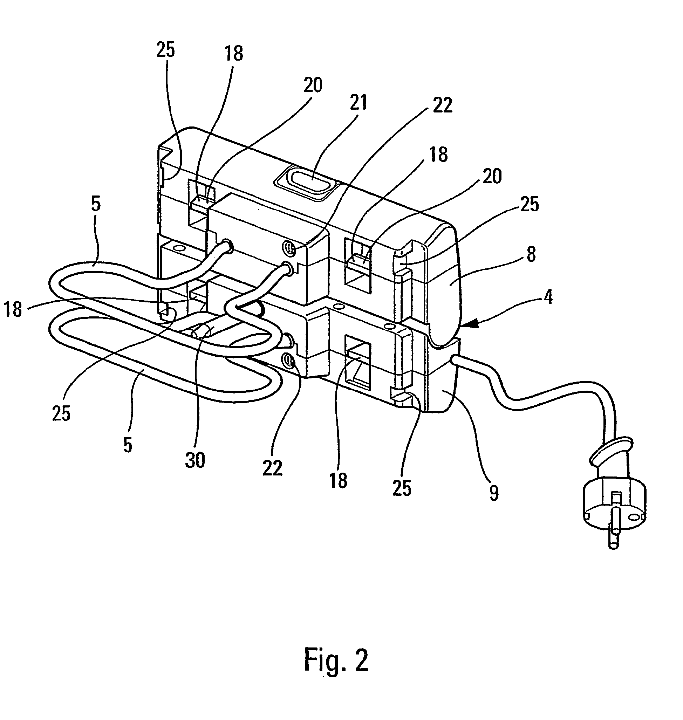

Comme on peut le voir à la figure 2, pour chaque sous-ensemble chauffant 3,4, la résistance électrique de chauffe 5 est fixée à un boîtier de connexion électrique 8,9, les boîtiers de connexion électrique 8,9 étant solidarisés l'un à l'autre par la charnière 4 de l'appareil 1.

Chaque corps de cuisson 6,7 comprend, dans le présent exemple, une coque 10, une plaque de cuisson 11 et un réflecteur 12. Chaque coque 10 est réalisée dans une matière plastique de préférence thermodurcissable et comprend une poignée 13 permettant, d'une part, de faire pivoter les deux sous-ensembles chauffant par rapport à l'axe de la charnière 4 en leur positions ouverte et fermée, et, d'autre part, de séparer le corps de cuisson 6,7 de la charnière 4. Chaque plaque de cuisson 11 est fixée de façon non étanche à la coque 10 correspondante afin de faciliter l'écoulement de l'eau de lavage et de rinçage ayant pénétrée à l'intérieur du corps de cuisson 6,7. Chaque plaque de cuisson 11 est réalisée en aluminium moulé ou embouti et comprend une surface de cuisson adaptée à recevoir la pâte à gaufre qui a été revêtue d'un anti-adhésif. Chaque réflecteur 12 est disposé de façon à être entre la coque 10 et la résistance électrique 5 quand le corps de cuisson 6,7 est solidarisé à la charnière 4 de manière à protéger la coque 10 du rayonnement thermique émis par la résistance électrique 5. Dans le présent exemple, le corps de cuisson est monobloc, la plaque de cuisson 11 n'étant pas séparable de la coque 10.

Les différents éléments de chaque corps de cuisson 6,7 (la coque, la plaque de cuisson et le réflecteur) sont conformés de façon à ne pas comprendre de zone de rétention d'eau.

L'ensemble des composants électriques sont ainsi disposés dans la charnière. Dans le présent exemple, l'élément permettant la régulation électrique (la sonde de température 30 adaptée à venir en contact avec la plaque de cuisson 11 inférieure) est disposé dans le boîtier de connexion inférieur 9 qui est associé au corps de cuisson inférieur 7, et les autres éléments (tels que le voyant lumineux indiquant la mise en marche du gaufrier et le fusible) sont disposés dans le boîtier de connexion supérieur 8 qui est associé au corps de cuisson supérieur 6.

Dans le présent exemple, chaque résistance électrique 5 est à distance de la plaque de cuisson 11 correspondante quand le corps de cuisson 6,7 est solidarisé à la charnière 4, la transmission thermique se faisant par rayonnement.

Afin de permettre la fixation libérable du corps de cuisson 6,7 au boîtier de connexion 8,9 correspondant, chaque corps 6,7 comprend deux organes de fixation 17 adaptés coopérer avec deux organes complémentaires de fixation 18 du boîtier 8,9 correspondant. Dans le présent exemple, chaque organe de fixation 17 est un crochet 17 fixe qui est solidaire de la face arrière de la coque 10 et chaque organe complémentaire de fixation 18 est un crochet 18 qui est mobile entre une position activée et une position de repos dans laquelle il est sollicité en permanence par un moyen élastique 19, les deux crochets 17,18 coopérant de façon à réaliser la fixation du corps de cuisson 6,7 au boîtier 8,9 par encliquetage. Chaque crochet fixe 17 et chaque crochet mobile 18 comprennent une pente 20 de façon à entraîner le crochet mobile 18 de sa position de repos à sa position activée lors du rapprochement du corps correspondant 6,7 au boîtier 8,9 puis son retour à sa position de repos quand le corps 6,7 est dans sa position de fixation.

En outre, afin de permettre la libération du corps 6,7 au boîtier 8,9 correspondant, chaque crochet mobile 18 est solidaire d'un bouton de commande manuelle 21 de façon à permettre l'entraînement du crochet mobile 18 de sa position de repos à sa position activée. Dans le présent exemple, un seul bouton de commande manuelle 21 permet d'actionner simultanément les deux crochets mobiles 18 d'un même boîtier 8,9. De plus, les boutons de commande manuelle 21 sont accessibles de l'extérieur (ils sont disposés sur la face du boîtier 8,9 prolongeant la face du corps de cuisson 6,7 opposée à la plaque de cuisson 11. Quand un bouton de commande manuelle 21 est activé, du fait de la présence des pentes 20 des deux crochets 17,18, le corps de cuisson 6,7 correspondant est automatiquement séparé du boîtier 8,9 de quelques millimètres.

Par ailleurs, chaque boîtier de connexion électrique 8,9 comprend un contacteur de sécurité 22 qui est mobile entre une position ouverte et une position fermée et qui est adapté à coopérer avec un élément de commande 23 du corps de cuisson 6,7 correspondant de façon passer dans sa position fermée uniquement quand le corps de cuisson 6,7 est fixé au boîtier 8,9 correspondant. Dans le présent exemple, l'élément de commande 23 est un pion 23 fixe qui est solidaire de la coque 10 et qui est adapté à entrer en contact avec le contacteur de sécurité 22 de façon à l'entraîner dans sa position fermée. Par ailleurs, les deux contacteurs de sécurité 22 sont montés en série de sorte que l'alimentation des résistances électriques 5 n'a lieu que lorsque les deux corps de cuisson 6,7 sont fixés à la charnière 4.

De plus, afin de guider le rapprochement des corps de cuisson 6,7 aux boîtiers de connexion 8,9 d'une position de contact jusqu'à leur fixation, chaque corps 6,7 comprend deux organes de guidage 24 adaptés à coopérer avec deux organes complémentaires de guidage 25 du boîtier 8,9 correspondant. Chaque organe de guidage 24 est tenon 24 qui fait saillie hors de la coque 10 et qui est adapté à coulisser le long d'une glissière 25 réalisée dans le boîtier 8,9 correspondant. Ainsi, la course pour la fixation et la séparation du corps de cuisson 6,7 au boîtier 8,9 se fait par une simple translation.

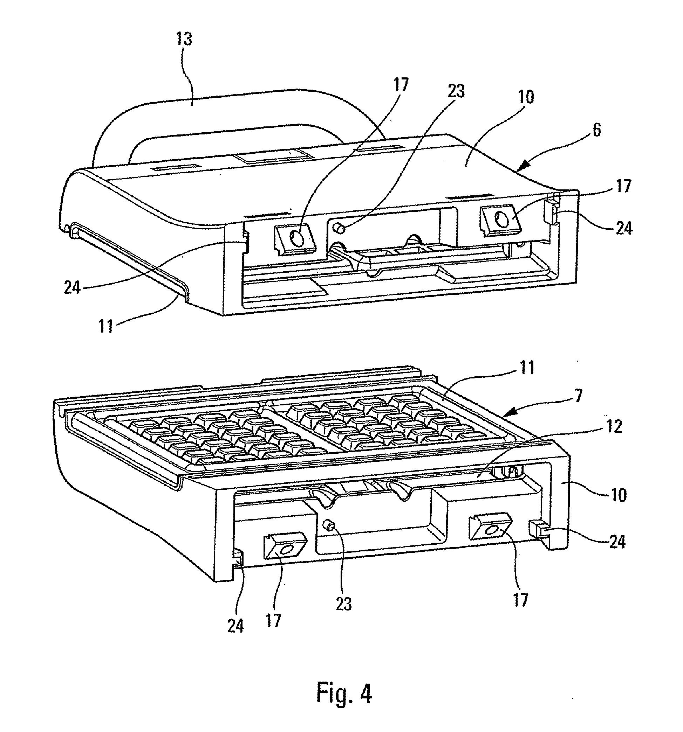

Par ailleurs, afin de détromper les deux corps de cuisson 6,7, les tenons 24 d'un corps de cuisson 6,7 ne peuvent coulisser que le long des glissières 25 du boîtier 8,9 correspondant du fait de leur géométrie spécifique, comme on peut le voir à la figure 4 pour les tenons 24, et à la figure 2 pour les glissières 25.

Bien évidemment, la présente invention n'est pas limitée au mode de réalisation illustré aux figures. Il serait ainsi possible que les coques soient réalisés en métal, que le corps de cuisson ne comprenne pas de réflecteur, ou que les résistances électriques soient en contact avec la plaque de cuisson correspondante quand le corps de cuisson est solidarisé à la charnière, la transmission thermique se faisant alors par conduction.

## Revendications

1. Appareil électroménager (1) du type gaufrier comprenant deux sous-ensembles chauffants (2,3) qui sont articulés l'un à l'autre par une charnière (4), et qui comprennent, chacun, un corps de cuisson (6,7) et une résistance électrique de chauffe (5) fixée à un boîtier de connexion électrique (8,9) séparable du corps de cuisson (6,7), **caractérisé en ce que** les boîtiers de connexion (8,9) sont solidarisés l'un à l'autre par la charnière (4) de l'appareil (1).

2. Appareil électroménager (1) selon la revendication 1, **caractérisé en ce que** le corps de cuisson (6,7) comprend une coque (10) et une plaque de cuisson (11) fixée à la coque (10) de façon non étanche à l'eau.

3. Appareil électroménager (1) selon la revendication 1 ou 2, **caractérisé en ce que** chaque corps de cuisson (6,7) comprend un réflecteur (12) disposé de façon à être entre la coque (10) et la résistance (5) quand le corps (6,7) est fixé au boîtier (8,9) correspondant.

4. Appareil électroménager (1) selon l'une des revendications 1 à 3, **caractérisé en ce que** les différents éléments (10,11,12) de chaque corps (6,7) sont conformés de façon à ne pas comprendre de zone de rétention d'eau.

5. Appareil électroménager (1) selon l'une des revendications 1 à 4, **caractérisé en ce que** chaque corps de cuisson (6,7) comprend un organe de fixation (17) adapté à coopérer avec un organe complémentaire de fixation (18) du boîtier de connexion (8,9) correspondant de façon à permettre la fixation libérable du corps (6,7) au boîtier (8, 9).

6. Appareil électroménager (1) selon la revendication 5, **caractérisé en ce que** l'organe de fixation (17) est un crochet fixe (17) qui est solidaire de la coque (10), et **en ce que** l'organe complémentaire de fixation (18) est un crochet (18) qui est mobile entre une position activée et une position de repos dans laquelle il est sollicité en permanence par un moyen élastique (19), les deux crochets (17,18) coopérant de façon à réaliser la fixation du corps (6,7) au boîtier (8,9) par encliquetage.

7. Appareil électroménager (1) selon la revendication 6, **caractérisé en ce que** chaque boîtier (8,9) comprend un bouton de commande manuelle (21) solidaire du crochet mobile (18) de façon à permettre l'entraînement du crochet mobile (18) de sa position de repos à sa position activée.

8. Appareil électroménager (1) selon l'une des revendications 1 à 7, **caractérisé en ce que** chaque boîtier de connexion (8,9) comprend un contacteur de sécurité (22) qui est mobile entre une position ouverte et une position fermée et qui est adapté à coopérer avec un élément de commande (23) du corps de cuisson (6,7) correspondant de façon passer dans sa position fermée uniquement quand le corps de cuisson (6,7) est fixé au boîtier (8,9) correspondant.

9. Appareil électroménager (1) selon la revendication 8, **caractérisé en ce que** l'élément de commande (23) est un pion (23) fixe solidaire du capot adapté à entrer en contact avec le contacteur de sécurité (22) de façon à l'entraîner dans sa position fermée.

10. Appareil électroménager (1) selon l'une des revendications 1 à 9, **caractérisé en ce que** chaque corps de cuisson (6,7) comprend un organe de guidage (24) adapté à coopérer avec un organe complémentaire de guidage (25) du boîtier (8,9) correspondant de façon à guider le rapprochement du corps de cuisson (6,7) au boîtier (8,9) d'une position de contact jusqu'à sa fixation.

11. Appareil électroménager (1) selon la revendication 10, **caractérisé en ce que** l'organe de guidage (24) est un tenon (24) faisant saillie de la coque (10) et étant adapté à coulisser le long d'une glissière (25) réalisée dans le boîtier (8,9) correspondant.

12. Appareil électroménager (1) selon la revendication 10 ou 11, **caractérisé en ce que** l'organe de guidage (24) d'un corps de cuisson (6,7) est conformé de façon à ne pouvoir coopérer qu'avec l'organe complémentaire de guidage (25) du boîtier (8,9) correspondant.

## Claims

1. Domestic electrical apparatus (1) of the waffle iron type comprising two heating sub-assemblies (2,3) which are hinged one to the other by a hinge (4), and which each comprise a cooking body (6, 7) and an electrical heating resistance (5) fixed to an electrical connection housing (8, 9) which can be separated from the cooking body (6, 7), **characterised by** the fact that the connection housings (8, 9) are attached to each other by the hinge (4) of the apparatus (1).

2. Domestic electrical apparatus (1) according to claim 1, **characterised by** the fact that the cooking body (6, 7) comprises a shell (10) and a cooking plate (11) fixed to the shell (10) in non-watertight manner.

3. Domestic electrical apparatus (1) according to claim 1 or 2, **characterised by** the fact that each cooking body (6, 7) includes a reflector (12) so arranged as to be between the shell (10) and the resistance (5) when the body (6, 7) is fixed to the corresponding housing (8, 9).

4. Domestic electrical apparatus (1) according to any one of claims 1 to 3, **characterised by** the fact that the different elements (10, 11, 12) of each body (6, 7) are so conformed as not to include a water retention zone.

5. Domestic electrical apparatus (1) according to any one of claims 1 to 4, **characterised by** the fact that each cooking body (6, 7) includes a fixing body (17) suitable to co-operate with a complementary fixing body (18) of the corresponding connection housing (8, 9) so as to allow releasable fixing of the body (6, 7) to the housing (8, 9).

6. Domestic electrical apparatus (1) according to claim 5, **characterised by** the fact that the fixing body (17) is a fixed hook (17) which is attached to the shell (10), and by the fact that the complementary fixing body (18) is a hook (18) which is moveable between an active position and a rest position in which it is continuously acted on by an elastic means (19), the two hooks (17, 18) co-operating so as to create snap-on fixing of the body (6, 7) to the housing (8, 9).

7. Domestic electrical apparatus (1) according to claim 6, **characterised by** the fact that each housing (8, 9) includes a manual operating button (21) attached to the moveable hook (18) so as to allow the moveable hook (18) to be driven from its rest position to its active position.

8. Domestic electrical apparatus (1) according to any one of claims 1 to 7, **characterised by** the fact that each connection housing (8, 9) includes a safety contactor (22) which is moveable between an open position and a closed position and which is suitable to co-operate with a control element (23) of the corresponding cooking body (6, 7) so as to pass into its closed position only when the cooking body (6, 7) is fixed to the corresponding housing (8, 9).

9. Domestic electrical apparatus (1) according to claim 8, **characterised by** the fact that the control element (23) is a fixed stud (23) attached to the cover suitable to enter into contact with the safety contactor (22) so as to drive it into its closed position.

10. Domestic electrical apparatus (1) according to any one of claims 1 to 9, **characterised by** the fact that each cooking body (6, 7) includes a guiding body (24) suitable to co-operate with a complementary guiding body (25) of the corresponding housing (8, 9) so as to guide the movement of the cooking body (6, 7) towards the housing (8, 9) from a contact position until it is fixed.

11. Domestic electrical apparatus (1) according to claim 10, **characterised by** the fact that the guiding body (24) is a tenon (24) projecting from the shell (10) and suitable to slide along a slide-way (25) formed in the corresponding housing (8, 9).

12. Domestic electrical apparatus (1) according to claim 10 or 11, **characterised by** the fact that the guiding body (24) of a cooking body (6, 7) is so conformed as to only be able to co-operate with the complementary guiding body (25) of the corresponding housing (8, 9).

## Patentansprüche

1. Elektrisches Haushaltsgerät nach der Art eines Waffeleisens, mit zwei heizenden Teileinheiten (2, 3), die miteinander über ein Scharnier (4) gelenkig verbunden sind, und die jeweils einen Kochkörper (6, 7) und einen elektrischen Heizwiderstand (5) aufweisen, der an einem elektrischen Anschlussgehäuse (8, 9) befestigt ist, das vom Kochkörper (6, 7) trennbar ist, **dadurch gekennzeichnet, dass** die Anschlussgehäuse (8, 9) durch das Scharnier (4) des Geräts (1) miteinander fest verbunden sind.

2. Elektrisches Haushaltsgerät (1) nach Anspruch 1, **dadurch gekennzeichnet, dass** der Kochkörper (6, 7) einen Rahmen (10) und eine Kochplatte (11) aufweist, die an dem Rahmen (10) für Wasser undurchlässig angebracht ist.

3. Elektrisches Haushaltsgerät (1) nach Anspruch 1 oder 2, **dadurch gekennzeichnet, dass** jeder Kochkörper (6, 7) einen Reflektor (12) aufweist, der in der Weise angeordnet ist, dass er zwischen dem Rahmen (10) und dem Widerstand (5) liegt, wenn der Körper (6, 7) mit dem entsprechenden Gehäuse (8, 9) verbunden ist.

4. Elektrisches Haushaltsgerät (1) nach einem der Ansprüche 1 bis 3, **dadurch gekennzeichnet, dass** die verschiedenen Elemente (10, 11, 12) jedes Körpers (6, 7) so angeordnet sind, dass sie keinen Rückhaltebereich für Wasser aufweisen.

5. Elektrisches Haushaltsgerät (1) nach einem der Ansprüche 1 bis 4, **dadurch gekennzeichnet, dass** jeder Kochkörper (6, 7) eine Befestigungseinrichtung (17) aufweist, die dazu geeignet ist, mit einer komplementären Befestigungseinrichtung (18) des entsprechenden Anschlussgehäuses (8, 9) in der Weise zusammenzuwirken, dass sie eine lösbare Befestigung des Körpers (6, 7) mit dem Gehäuse (8, 9) ermöglicht.

6. Elektrisches Haushaltsgerät (1) nach Anspruch 5, **dadurch gekennzeichnet, dass** die Befestigungseinrichtung (17) ein feststehender Haken (17) ist, der mit dem Rahmen (10) fest verbunden ist, und **dadurch**, dass die komplementäre Befestigungseinrichtung (18) ein Haken (18) ist, der zwischen einer aktivierten Position und einer Ruheposition beweglich ist, in der er von einem elastischen Mittel (19) dauerhaft beansprucht wird, wobei die zwei Haken (17, 18) in der Weise zusammenwirken, dass die Befestigung des Körpers (6, 7) an dem Gehäuse (8, 9) durch Einklinken erfolgt.

7. Elektrisches Haushaltsgerät (1) nach Anspruch 6, **dadurch gekennzeichnet, dass** jedes Gehäuse (8, 9) einen mit dem beweglichen Haken (18) fest verbundenen manuellen Bedienungsknopf (21) aufweist, der die Bewegung des beweglichen Hakens (18) aus seiner Ruheposition in die aktivierte Position ermöglicht.

8. Elektrisches Haushaltsgerät (1) nach einem der Ansprüche 1 bis 7, **dadurch gekennzeichnet, dass** jedes Anschlussgehäuse (8, 9) einen Sicherheitsschalter (22) aufweist, der zwischen einer offenen Position und einer geschlossenen Position bewegbar ist und der dazu geeignet ist, mit einem Bedienelement (23) des entsprechenden Kochkörpers (6, 7) so zusammenzuwirken, dass er nur in seine geschlossene Position übergeht, wenn der Kochkörper (6, 7) an dem entsprechenden Gehäuse (8, 9) befestigt ist.

9. Elektrisches Haushaltsgerät (1) nach Anspruch 8, **dadurch gekennzeichnet, dass** das Bedienelement (23) ein mit einer Haube fest verbundener Pion ist, der dazu geeignet ist, mit dem Sicherheitsschalter (22) so in Kontakt zu kommen, dass er ihn in die geschlossene Position bewegt.

10. Elektrisches Haushaltsgerät (1) nach einem der Ansprüche 1 bis 9, **dadurch gekennzeichnet, dass** jeder Kochkörper (6, 7) eine Führungseinrichtung (24) aufweist, die dazu geeignet ist, mit einer komplementären Führungseinrichtung (25) des entsprechenden Gehäuses (8, 9) so zusammenzuwirken, dass sie die Annäherung des Kochkörpers (6, 7) an das Gehäuse (8, 9) von einer Kontaktposition bis zu ihrer Verbindung führt.

11. Elektrisches Haushaltsgerät (1) nach Anspruch 10, **dadurch gekennzeichnet, dass** die Führungseinrichtung (24) ein Zapfen (24) ist, der von dem Rahmen (10) vorragt und dazu geeignet ist, entlang einer Gleitschiene (25) zu gleiten, die in dem entsprechenden Gehäuse (8, 9) ausgebildet ist.

12. Elektrisches Haushaltsgerät (1) nach Anspruch 10 oder 11, **dadurch gekennzeichnet, dass** die Führungseinrichtung (24) eines Kochkörpers (6, 7) so ausgebildet ist, dass sie nur mit der komplementären Führungseinrichtung (25) des entsprechenden Gehäuses (8, 9) zusammenwirken kann.
